# EUROPÄISCHE PATENTSCHRIFT

(11) **EP 0 963 887 B1**
(45) Veröffentlichungstag und Bekanntmachung des Hinweises auf die Patenterteilung: **26.02.2003**
(21) Anmeldenummer: 99109296.6
(22) Anmeldetag: 27.05.1999
(51) Int. Cl.: B60R 21/32, B60R 21/01

(54) **Verfahren und Vorrichtung zur Sitzbelegungserkennung eines Fahrzeuges**
Method and device for detecting the occupation of a seat in a vehicle
Procédé et dispositif pour détecter l'occupation d'un siège dans un véhicule

(30) Priorität: 12.06.1998 DE 19826287
(43) Veröffentlichungstag der Anmeldung: 15.12.1999
(73) Patentinhaber: Volkswagen Aktiengesellschaft, 38436 Wolfsburg (DE)
(72) Erfinder: Quissek, Friedrich-Julius, Dr., 38118 Braunschweig (DE); Mai, Rudolf, 38442 Wolfsburg (DE); Bergholz, Ralf, Dr., 38108 Braunschweig (DE); Milch, Stefan, 38106 Braunschweig (DE)

(56) Entgegenhaltungen:
- EP-A- 0 557 589
- DE-A- 1 944 606
- GB-A- 2 236 419
- US-A- 3 970 846
- US-A- 5 737 083

## Beschreibung

Die Erfindung betrifft eine Sitzbelegungserkennungsvorrichtung und ein Verfahren zur Sitzbelegungserkennung eines Fahrzeugsitzes mit mindestens einem optischen Sender und Detektor.

Aus vielerlei Gründen ist die Kenntnis ob ein Fahrzeugsitz belegt ist, von Interesse. Ist z.B. ein Fahrzeug mit einem Beifahrer-Airbag ausgerüstet, so soll dieser auch nur ausgelöst werden, wenn der Beifahrersitz wirklich belegt ist, da eine Instandsetzung des ausgelösten Airbags sehr kostspielig ist. Des weiteren kann eine Klimaanlage bzw. ein Gebläse entsprechend anders ausgerichtet werden, je nachdem ob der Beifahrersitz belegt ist oder nicht. Da weiterhin in Abhängigkeit von der Art der Sitzbelegung die Ansteuerung des Airbags erfolgen sollte, um Verletzungen bei der Auslösung auszuschließen, ist man dazu übergegangen, die ungenauen mechanischen Detektoren durch geeignetere zu ersetzen.

Aus der DE 38 43 624 ist eine Sitzbelegungserkennungseinrichtung bekannt, bei der in der Nähe der Bodenfläche eines Sitzkissens ein Gewichtssensor angeordnet ist, mittels dessen druckabhängig eine Unterscheidung zwischen Kind und Erwachsenem oder keiner Belegung gemacht werden kann. Wird eine Belegung erfaßt, so wird eine Antriebseinrichtung für eine Kopfstütze von einer Ruhelage in eine Betriebslage entsprechend der Art der festgestellten Belegung bewegt. Die bekannte Sitzbelegungseinrichtung ist prinzipiell auch für eine entsprechend dosierte Airbag-Auslösung geeignet, weist jedoch eine Reihe von Nachteilen auf. So variiert das erfaßte Gewicht der auf dem Fahrzeugsitz befindlichen Person stark mit der Sitzposition.

Aus der DE 44 42 841 ist eine Sitzbelegungserkennungseinrichtung bekannt, bei der ein Gewichtssensor an oder auf einer Sitzkissenanordnung befestigt ist, der zwei Paare von Dehnungsmessern auf einer flexiblen Trägerstruktur umfaßt. Unter dem Gewicht einer auf dem Fahrzeugsitz sitzenden Person biegt sich die Trägerstruktur durch, wodurch das im oberen Teil der Trägerstruktur angeordnete Paar der Dehnungsmesser komprimiert wird und das im unteren Teil der Trägerstruktur angeordnete Paar Dehnungsmesser unter Zug steht. Die zwei Paare der Dehnungsmesser sind elektrisch in einer Wheatstone-Brücke angeordnet, an der ein entsprechendes Differenzsignal abgreifbar ist, das ein Maß für das Gewicht der Person auf dem Sitz ist. Des weiteren umfaßt die Sitzbelegungseinrichtung einen Neigungssensor, der die Stellung der Sitzrückenanordnung erfaßt. Der Grund hierfür ist, daß sich ein Insasse gewöhnlich gegen die Sitzrückenanordnung lehnt, so daß insbesondere das Gewicht des Oberkörpers nicht vom Gewichtssensor erfaßt wird. Dabei nimmt das vom Gewichtssensor erfaßte Gewicht mit zunehmendem Neigungswinkel ab. Anhand vom erfaßten Gewicht und Neigungswinkel kann jedoch mittels empirischer Kennlinien oder funktionaler Zusammenhänge auf das tatsächliche Gewicht zurückgeschlossen werden. Weiter umfaßt die Einrichtung Fußstellungs-Sensoren, um den Anteil des Gewichtes zu erfassen, der direkt über die Füße auf den Fahrzeugboden abgeleitet wird. Falls die Beine des Insassen vollständig ausgestreckt sind, ist der Fehler aufgrund der nicht erfaßten Masse durch den Gewichtssensor am geringsten, bei einer Fußstellung direkt neben dem Fahrzeugsitz am größten. Die erfaßte Fußstellung wird ebenfalls mittels empirischer Kennlinien oder funktionaler Zusammenhänge bei der Ermittlung des tatsächlichen Gewichts des Insassen berücksichtigt. Nachteilig an der bekannten Vorrichtung ist, daß diese aufgrund der vielen unterschiedlichen zu verarbeitenden Sensorsignale recht komplex ist.

Aus der DE 44 00 664 ist eine Sitzbelegungserkennungsvorrichtung gemäß dem Oberbegriff von Anspruch 1 bekannt, bei der auf den Sitz eine Anzahl von Lichtemittern abgebildet werden und diese Leuchtflecke über ein in einer definierten Entfernung von diesen Lichtemittem befindliche Photodetektorarray über eine Optik abgebildet werden und somit über einen Mikroprozessor die Kontur des Sitzes oder der darauf befindlichen Person oder Gegenstände abgetastet und zugeordnet wird. Nachteilig an der bekannten Vorrichtung ist die aufwendige Justierung der Lichtemitter. Selbst wenn diese, wie vorgeschlagen, als Array ausgebildet sind, sind diese mit der notwendigen Vorsicht einzubauen und zu justieren. Des weiteren muß die Vorrichtung im vorderen Kraftfahrzeugbereich angeordnet werden, wo natürlicherweise wenig Bauraum zur Verfügung steht.

Der Erfindung liegt daher das technische Problem zugrunde, ein Verfahren und eine Vorrichtung zur Sitzbelegungserkennung eines Fahrzeugsitzes zu schaffen, die einfach und robust installierbar ist und den vorhandenen Bauraum möglichst optimal nutzt.

Die Lösung des technischen Problems ergibt sich durch die Merkmale der Patentansprüche 1 und 9. Durch die Verwendung von Lichtwellenleitem, die dem optischen Sender und den optischen Detektoren zugeordnet sind, wird erreicht, daß im Bereich des Fahrzeugsitzes nur die Lichtwellenleiter montiert werden müssen, die mechanisch robust und von den Abmessungen gering sind. Durch die Robustheit können zu Justagezwecken die Lichtwellenleiter einfach entsprechend hin- und hergebogen werden. Die vom Bauvolumen größeren optischen Detektoren und der optische Sender können irgendwo im Kraftfahrzeug angeordnet werden, wo die Ausnutzung vom Bauplatz unkritisch ist. Des weiteren können diese auch derart plaziert werden, daß die Gefahr einer Beschädigung durch einen Unfall gering ist. Weitere vorteilhafte Ausgestaltungen der Erfindung ergeben sich aus den Unteransprüchen.

In einer bevorzugten Ausführungsform sind die optischen Detektoren als Kamera, insbesondere als CCD-Kamera ausgebildet, der die Lichtwellenleiter gebündelt zugeführt sind. Durch Kenntnis der Zuordnung der Lichtwellenleiter auf der Empfängerseite zur den Lichtwellenleitern auf der Sendeseite läßt sich dann leicht auf das Gesamtbild und damit auf die Art der Sitzbelegung zurückschließen. Diese Zuordnung kann beispielsweise mittels Testmuster des optischen Senders oder sukzessive Ansteuerung der einzelnen Lichtwellenleiter auf der Sendeseite vorgenommen werden.

Prinzipiell kann der optische Sender bezüglich der Wellenlänge beliebig sein, jedoch weisen einzelne Ausführungsformen spezielle Vorteile auf.
Der Vorteil von IR-Quellen bzw. -Sendern ist, daß die ausgesendete Strahlung mit dem menschlichen Auge nicht wahrgenommen werden kann, so daß dadurch beispielsweise der Kraftfahrzeugführer durch optische Erscheinungen nicht in seiner Konzentration gestört wird. Der Vorteil eines Lasers hingegen ist die Zuverlässigkeit auch bei Rauch, beispielsweise Zigarettenrauch, im Kraftfahrzeug im Gegensatz zu IR-Quellen. Hingegen muß bei Lasern stets darauf geachtet werden, daß der Laserstrahl nicht in die Augen trifft. Der Vorteil einer Lichtquelle liegt darin, daß die Lichtwellenleiter aufgrund der sichtbaren Strahlung gut zueinander justiert werden können.

Daher wird in einer weiteren bevorzugten Ausführungsform der optische Sender durch die zuvor beschriebenen verschiedenen Quellen gebildet, die wahlweise auswählbar sind. Vorzugsweise wird dabei die Lichtquelle nur zu Justagezwecken beim Einbau und Wartung benutzt, wobei für den Regelbetrieb die IR-Quelle verwendet wird. Periodisch kann dann zusätzlich kurzzeitig der Laser zugeschaltet werden, um die Betriebssicherheit zu erhöhen. Um Störeinflüsse durch andere Strahlungsquellen zu unterdrücken, sind der optische Sender und die optischen Detektoren zueinander synchronisiert. Durch entsprechende Puls- Blende-Funktionen oder geeignete Codierungsverfahren wie beispielsweise Frequenzmodulation läßt sich dann die Störstrahlung gut herausfiltern.

Die Erfindung wird nachfolgend anhand eines bevorzugten Ausführungsbeispiels näher erläutert. Die Fig. zeigen:
Fig. 1 eine schematische Darstellung der Vorrichtung in einer Fahrgastzelle und
Fig. 2 ein Blockschaltbild der Vorrichtung zur Sitzplatzerkennung.

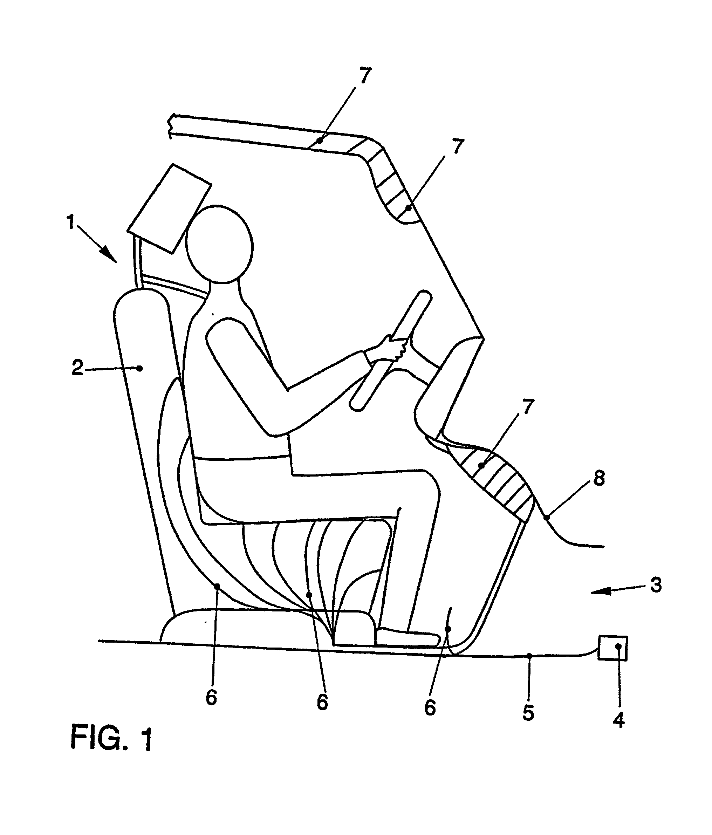

In der Fig. 1 ist eine Fahrgastzelle 1 eines Kraftfahrzeuges mit einem besetzten Fahrzeugsitz 2 dargestellt. Zur Erkennung, ob und wie ein Fahrzeugsitz 2 in dem Kraftfahrzeug besetzt ist, ist eine Vorrichtung 3 zur Sitzplatzerkennung im Kraftfahrzeug angeordnet. Die Vorrichtung 3 umfaßt einen optischen Sender 4, dem ein erstes Lichtwellenleiterbündel 5 zugeordnet ist, dessen einzelne Fasern bzw. Lichtwellenleiter 6 im, am und um den Fahrzeugsitz 2 herum angeordnet sind. Jedem Lichtwellenleiter 6 ist ein weiterer Lichtwellenleiter 7 zugeordnet, der im Strahlengang des ersten Lichtwellenleiters 6 angeordnet ist. Die Lichtwellenleiter 7 sind ebenfalls zu einem Lichtwellenleiterbündel 8 zusammengefaßt und zu einem nicht dargestellten optischen Detektor geführt. Die Lichtwellenleiter 6 sind derart angeordnet, daß diese die gesamte Sitzposition bzw. Kontur des Fahrzeuginsassen erfassen. Zur Kontrolle der Vorrichtung 3 kann dabei mindestens ein Lichtwellenleiter 6 mit korrespondierendem Lichtwellenleiter 7 derart angeordnet werden, daß zwischen den beiden Lichtwellenleitern 6, 7 nie ein Objekt sein kann, so daß mittels dieser Referenzstrecke die Funktionalität der Vorrichtung 3 überprüfbar ist.

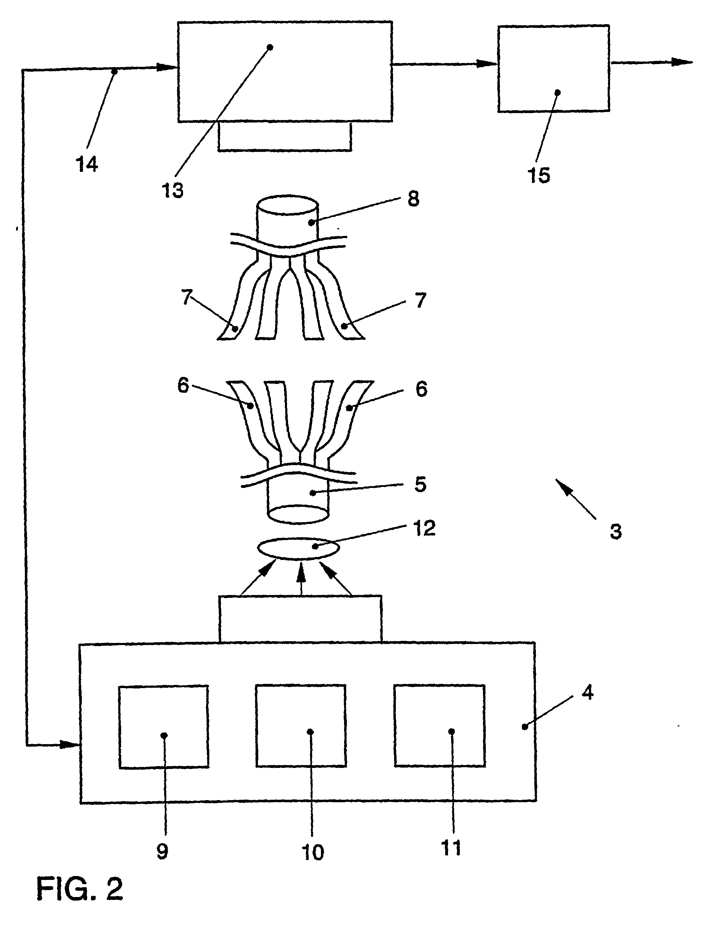

In der Fig. 2 ist die Vorrichtung 3 zur Sitzbelegungserkennung als Blockschaltbild dargestellt. Der optische Sender 4 umfaßt eine Lichtquelle 9, eine IR-Quelle 10 und einen Laser 11, die wahlweise über eine Optik 12 Strahlung in das Lichtwellenleiterbündel 5 einkoppeln können. Der optische Sender 4 und der optische Detektor 13, der vorzugsweise als Kamera ausgebildet ist, sind über eine Leitung 14 miteinander verbunden. Der optische Detektor 13 ist mit einer Auswerteeinheit 15 verbunden, die ihre Ergebnisse an nicht dargestellte Fahrzeuginsassenrückhaltesysteme, wie beispielsweise einen Airbag oder Gurtstraffer, übergibt. Ein wesentlicher Vorteil der Vorrichtung 3 ist, daß durch die Lichtwellenleiter 6, 7 der optische Sender 4 und der optische Detektor 13 räumlich weit entfernt vom Ort der eigentlichen Sensierung angeordnet sein können. Zur Montage sind dann in der Fahrgastzelle 1 nur noch die unempfindlichen Lichtwellenleiter 6, 7 zu verlegen, die aufgrund ihrer Flexibilität gut zueinander justierbar sind. Dazu kann der optische Sender 4 auf Betrieb mit der Lichtquelle 9 geschaltet werden, so daß aufgrund der visuellen Wahrnehmung die Justierung leicht überprüft und gegebenenfalls nachkorrigiert werden kann. Ebenso bietet sich die Lichtquelle 9 für Wartungsarbeiten und Kontrollen an. Im eigentlichen Betrieb wird vorzugsweise die IR-Quelle 10 verwendet. Erhält nun die Vorrichtung 3 ein Aktivierungssignal, beispielsweise von einem Türzustandssensor oder einem Zündungssignal, so wird die IR-Quelle 10 ausgewählt und koppelt ihre Strahlung in das Lichtwellenleiterbündel 5 ein. Um Störeinflüsse durch externe Lichtquellen zu unterdrücken, werden der optische Sender 4 und der optische Detektor 13 über die Leitung 14 miteinander synchronisiert. Strahlt nun die IR-Lichtquelle 10 einen Impuls ab, so kann aufgrund der Synchronität der optische Detektor eine vorhandenen Untergrundstrahlung leicht anziehen. Ebenso kann das ausgesendete Signal moduliert werden. Befindet sich zwischen zwei Lichtwellenleitern 6, 7 ein Objekt, beispielsweise ein Bein, so empfängt der Lichtwellenleiter 7 keine Strahlung. Somit entsteht am optischen Detektor 13 eine digitale Kontur des Fahrzeugsitzes 2, die dann beispielsweise mittels Referenzbildem in der Auswerteeinheit 15 ausgewertet werden kann. Nach bestimmten Zeiträumen kann dann kurzfristig der Laser 11 eingekoppelt werden, um Verfälschungen aufgrund von Rauch in der Fahrgastzelle 1 zu kompensieren. Die Vorrichtung 3 kann dabei wahlweise kontinuierlich oder situationsbedingt betrieben werden.

## Patentansprüche

1. Sitzbelegungserkennungsvorrichtung für einen Fahrzeugsitz, umfassend mindestens einen optischen Sender und einen optischen Detektor,
**dadurch gekennzeichnet, daß**
dem optischen Sender (4) eine Vielzahl von Lichtwellenleitern (6) zugeordnet sind, die im, am und/oder um den Fahrzeugsitz (2) herum angeordnet sind, wobei im Strahlengang eines jeden Lichtwellenleiters (6) ein korrespondierender Lichtwellenleiter (7) angeordnet ist, dem jeweils ein optischer Detektor (13) zugeordnet ist.

2. Vorrichtung nach Anspruch 1, **dadurch gekennzeichnet, daß** die optischen Detektoren (13) als Kamera ausgebildet sind, der die Lichtwellenleiter (7) gebündelt zugeführt sind.

3. Vorrichtung nach Anspruch 1 oder 2, **dadurch gekennzeichnet, daß** der optische Sender (4) als IR-Emitter (10) ausgebildet ist.

4. Vorrichtung nach Anspruch 1 oder 2, **dadurch gekennzeichnet, daß** der optische Sender (4) als Laser (11) ausgebildet ist.

5. Vorrichtung nach Anspruch 1 oder 2, **dadurch gekennzeichnet, daß** der optische Sender (4) als Lichtquelle (9) ausgebildet ist.

6. Vorrichtung nach einem der vorangegangenen Ansprüche, **dadurch gekennzeichnet, daß** der optische Sender (4) mindestens zwei verschiedenartige optische Quellen (9, 10, 11) umfaßt, die wahlweise auswählbar sind.

7. Vorrichtung nach einem der vorangegangenen Ansprüche, **dadurch gekennzeichnet, daß** der optische Sender (4) und die optischen Detektoren (13) zueinander synchronisierbar sind.

8. Vorrichtung nach einem der vorangegangenen Ansprüche, **dadurch gekennzeichnet, daß** der optische Sender (4) pulsförmig und/oder modulierbar ansteuerbar ist.

9. Verfahren zur Sitzbelegungserkennung eines Fahrzeugsitzes (2), mittels eines optischen Senders (4), einer Vielzahl dem optischen Sender (4) zugeordneten ersten Lichtwellenleitern (6), die im, am und/oder um den Fahrzeugsitz (2) herum angeordnet sind, einer Vielzahl von zweiten Lichtwellenleitern (7), die jeweils im Strahlengang eines ersten Lichtwellenleiters (6) angeordnet sind, wobei eine eindeutige Zuordnung zwischen den ersten Lichtwellenleitern (6) besteht und den zweiten Lichtwellenleitern (7) jeweils ein optischer Detektor (13) zugeordnet ist, umfassend folgende Verfahrensschritte:
a) Aussenden von optischer Strahlung durch den optischen Sender (4),
b) Einkoppeln der optischen Strahlung in die ersten Lichtwellenleiter (6),
c) Abstrahlen der optischen Strahlung durch die ersten Lichtwellenleiter (6),
d) Empfangen der abgestrahlten Strahlung von den zweiten Lichtwellenleitern (7), falls kein Hindernis im betreffenden Strahlengang sich befindet,
e) Weiterleiten der empfangenen optischen Strahlung an die optischen Detektoren (13)
f) Auswerten der empfangenen optischen Strahlung,
g) Ermitteln einer Kontur der Sitzbelegung und
h) Weiterleiten der ermittelten Kontur an Fahrzeuginsassensicherungssysteme.

10. Verfahren nach Anspruch 9 mittels eines optischen Senders, der einen Laser (11) und eine IR- und/oder Lichtquelle umfaßt, **dadurch gekennzeichnet, daß** die IR- und/oder Lichtquelle (9, 10) pulsförmig und/oder moduliert senden und nach einer festgelegten Anzahl von Pulsen oder Wellenzügen ein Lasersignal gesendet wird.

11. Verfahren nach Anspruch 10, **dadurch gekennzeichnet, daß** zu Justierzwecken der optische Sender (4) auf die Lichtquelle (9) umgeschaltet wird.

12. Verfahren nach einem der Anspürche 9 bis 11, **dadruch gekennzeichnet, daß** der optische Sender (4) mit den optischen Detektoren (13) synchronisiert ist.

## Claims

1. Seat occupation detection device for a vehicle seat, comprising at least an optical transmitter and an optical detector, **characterized in that** a large number of optical fibres (6) is assigned to the optical transmitter (4), which are arranged in, on and/or around the vehicle seat (2), a corresponding optical fibre (7) being arranged in the beam path of each optical fibre (6), to which in each case an optical detector (13) is assigned.

2. Device according to Claim 1, **characterized in that** the optical detectors (13) are designed as a camera, to which the optical fibres (7) are led in a bundle.

3. Device according to Claim 1 or 2, **characterized in that** the optical transmitter (4) is designed as an IR emitter (10).

4. Device according to Claim 1 or 2, **characterized in that** the optical transmitter (4) is designed as a laser (11).

5. Device according to Claim 1 or 2, **characterized in that** the optical transmitter (4) is designed as a light source (9).

6. Device according to one of the preceding claims, **characterized in that** the optical transmitter (4) comprises at least two different types of optical sources (9, 10, 11), which can be selected as desired.

7. Device according to one of the preceding claims, **characterized in that** the optical transmitter (4) and the optical detectors (13) can be synchronized with one another.

8. Device according to one of the preceding claims, **characterized in that** the optical transmitter (4) can be driven in pulsed form and/or such that it can be modulated.

9. Method of detecting the occupation of a vehicle seat (2), by means of an optical transmitter (4), a large number of first optical fibres (6) which are assigned to the optical transmitter (4) and which are arranged in, on and/or around the vehicle seat (2), a large number of second optical fibres (7), which are in each case arranged in the beam path of a first optical fibre (6), there being an unambiguous association between the optical fibres (6, 7) and in each case an optical detector (13) being assigned to the second optical fibres (7), the method comprising the following method steps:
a) emission of optical radiation by the optical transmitter (4),
b) injection of the optical radiation into the first optical fibres (6),
c) emission of the optical radiation by the first optical fibres (6),
d) reception of the emitted radiation by the second optical fibres (7), if there is no obstacle in the relevant beam path,
e) forwarding of the received optical radiation to the optical detectors (13),
f) evaluation of the received optical radiation,
g) determination of a contour of the seat occupation and
h) forwarding of the contour determined to vehicle occupant safety systems.

10. Method according to Claim 9 by means of an optical transmitter, which comprises a laser (11) and an IR and/or light source, **characterized in that** the IR and/or light source (9, 10) transmits in pulse form and/or modulated form and, after a defined number of pulses or wave trains, a laser signal is transmitted.

11. Method according to Claim 10, **characterized in that**, for adjustment purposes, the optical transmitter (4) is switched over to the light source (9).

12. Method according to one of Claims 9 to 11, **characterized in that** the optical transmitter (4) is synchronized with the optical detectors (13).

## Revendications

1. Dispositif de détection d'occupation de siège pour un véhicule, comprenant au moins un émetteur optique et un détecteur optique, **caractérisé en ce qu'**une pluralité de fibres optiques (6) est associée à l'émetteur optique (4), lesquelles sont disposées dans, sur et/ou autour du siège du véhicule (2), une fibre optique (7) correspondante qui est à chaque fois associée à un détecteur optique (13) étant disposée dans le trajet du faisceau de chacune des fibres optiques (6).

2. Dispositif selon la revendication 1, **caractérisé en ce que** les détecteurs optiques (13) sont réalisés sous la forme d'une caméra à laquelle les fibres optiques (7) sont acheminées en toron.

3. Dispositif selon la revendication 1 ou 2, **caractérisé en ce que** l'émetteur optique (4) est réalisé sous la forme d'un émetteur IR (10).

4. Dispositif selon la revendication 1 ou 2, **caractérisé en ce que** l'émetteur optique (4) est réalisé sous la forme d'un laser (11).

5. Dispositif selon la revendication 1 ou 2, **caractérisé en ce que** l'émetteur optique (4) est réalisé sous la forme d'une source de lumière (9).

6. Dispositif selon l'une des revendications précédentes, **caractérisé en ce que** l'émetteur optique (4) comprend au moins deux sources optiques (9, 10, 11) de types différents qui peuvent être sélectionnées à volonté.

7. Dispositif selon l'une des revendications précédentes, **caractérisé en ce que** l'émetteur optique (4) et les détecteurs optiques (13) peuvent être synchronisés entre eux.

8. Dispositif selon l'une des revendications précédentes, **caractérisé en ce que** l'émetteur optique (4) peut être commandé par des impulsions et/ou par modulation.

9. Procédé pour détecter l'occupation d'un siège dans un véhicule (2) au moyen d'un émetteur optique (4), d'une pluralité de premières fibres optiques (6) associées à l'émetteur optique (4), lesquelles sont disposées dans, sur et/ou autour du siège du véhicule (2), d'une pluralité de deuxièmes fibres optiques (7) qui sont chacune disposées dans le trajet du faisceau d'une première fibre optique (6), une association claire existant ici entre les premières fibres optiques (6) et les deuxièmes fibres optiques (7) étant à chaque fois associées à un détecteur optique (13), comprenant les étapes de procédé suivantes :
a) émission d'un rayonnement optique par le biais de l'émetteur optique (4),
b) injection du rayonnement optique dans les premières fibres optiques (6),
c) diffusion du rayonnement optique à travers les premières fibres optiques (6),
d) réception du rayonnement diffusé par les deuxièmes fibres optiques (7) si aucun obstacle ne se trouve dans le trajet correspondant du faisceau,
e) transmission du rayonnement optique reçu aux détecteurs optiques (13),
f) analyse du rayonnement optique reçu,
g) détermination d'un profil d'occupation du siège et
h) transmission du profil déterminé à des systèmes de sécurisation des occupants du véhicule.

10. Procédé selon la revendication 9 au moyen d'un émetteur optique qui comprend un laser (11) et une source IR et/ou de lumière, **caractérisé en ce que** la source IR et/ou de lumière (9, 10) émet de manière impulsionnelle et/ou modulée et un signal laser est émis après un nombre prédéfini d'impulsions ou de séries d'ondes.

11. Procédé selon la revendication 10, **caractérisé en ce que** l'émetteur optique (4) est commuté sur la source de lumière (9) à des fins de réglage.

12. Procédé selon l'une des revendications 9 à 11, **caractérisé en ce que** l'émetteur optique (4) est synchronisé avec les détecteurs optiques (13).
